# EUROPÄISCHE PATENTSCHRIFT

(11) **EP 1 058 974 B1**
(45) Veröffentlichungstag und Bekanntmachung des Hinweises auf die Patenterteilung: **28.08.2002**
(21) Anmeldenummer: 99907307.5
(22) Anmeldetag: 03.02.1999
(51) Int. Cl.: H04B 7/26

(54) **VERFAHREN UND FUNK-KOMMUNIKATIONSSYSTEM ZUR INFORMATIONSÜBERTRAGUNG ZWISCHEN EINER BASISSTATION UND WEITEREN FUNKSTATIONEN**
METHOD AND RADIOCOMMUNICATIONS SYSTEM FOR TRANSMITTING INFORMATION BETWEEN A BASE STATION AND OTHER STATIONS
PROCEDE ET SYSTEME DE RADIOCOMMUNICATIONS POUR TRANSMETTRE DES INFORMATIONS ENTRE UNE STATION DE BASE ET D'AUTRES STATIONS

(30) Priorität: 27.02.1998 DE 19808371
(43) Veröffentlichungstag der Anmeldung: 13.12.2000
(73) Patentinhaber: SIEMENS AKTIENGESELLSCHAFT, 80333 München (DE)
(72) Erfinder: DILLINGER, Markus, D-81737 München (DE); SCHINDLER, Jürgen, D-81369 München (DE); TRAYNARD, Jean-Michel, D-81667 München (DE)
(86) Internationale Anmeldenummer: DE9900285
(87) Internationale Veröffentlichungsnummer: WO99044312

(56) Entgegenhaltungen:
- POVEY G J R ET AL: "TDD-CDMA EXTENSION TO FDD-CDMA BASED THIRD GENERATION CELLULAR SYSTEM" 1997 IEEE 6TH. INTERNATIONAL CONFERENCE ON UNIVERSAL PERSONAL COMMUNICATIONS RECORD, SAN DIEGO, 12 - 16. OCT. 1997, Bd. 2, Nr. CONF. 6, 12. Oktober 1997, Seiten 813-817, XP000777934 INSTITUTE OF ELECTRICAL AND ELECTRONICS ENGINEERS
- POVEY G J R: "Capacity of a cellular time division duplex CDMA system" IEE PROCEEDINGS-COMMUNICATIONS, OCT. 1994, UK, Bd. 141, Nr. 5, Seiten 351-356, XP002108073 ISSN 1350-2425

## Beschreibung

In G. Povey et al.: "TDD-CDMA Extension to FDD-CDMA Based Third Generation Cellular System", 1997 IEEE 6^{th}. International Conference on Universal Personal Communications Record, San Diego, 12 - 16. Oktober 1997, Seiten 813 - 817 ist ein FDD-CDMA-Mobilfunksystem der dritten Generation beschrieben, das innerhalb eines Übertragungsrahmens eine asymmetrische Übertragungskapazität in Aufwärtsrichtung und in Abwärtsrichtung zwischen einer Basisstation und einem Teilnehmer aufweist.

In Funk-Kommunikationssystemen werden Informationen (beispielsweise Sprache, Bildinformationen oder andere Daten) mit Hilfe von elektromagnetischen Wellen über eine Funkschnittstelle zwischen sendender und empfangender Funkstation (Basisstation bzw. Mobilstation) übertragen. Das Abstrahlen der elektromagnetischen Wellen erfolgt dabei mit Trägerfrequenzen, die in dem für das jeweilige System vorgesehenen Frequenzband liegen. Beim GSM (Global System for Mobile Communication) liegen die Trägerfrequenzen im Bereich von 900, 1800 bzw. 1900 MHz. Für zukünftige Mobilfunknetze mit CDMA- oder TD/CDMA-Übertragungsverfahren über die Funkschnittstelle, beispielsweise das UMTS (Universal Mobile Telecommunication System) oder andere Systeme der 3. Generation sind Frequenzen im Frequenzband von ca. 2000 MHz vorgesehen.

Signale unterliegen bei ihrer Ausbreitung in einem Ausbreitungsmedium Störungen durch Rauschen. Durch Beugungen und Reflexionen durchlaufen Signalkomponenten verschiedene Ausbreitungswege und überlagern sich beim Empfänger. Eine Kanalimpulsantwort beschreibt einen solchen Mehrwegekanal. Zum weiteren kommt es bei mehreren Signalquellen zu Überlagerungen dieser Signale. Frequenzmultiplex (FDMA), Zeitlagenmultiplex (TDMA) oder ein als Codemultiplex (CDMA) bekanntes Verfahren dienen der Unterscheidung der Signalquellen und damit zur Auswertung der Signale.

Eine besondere Ausprägung des Zeitlagenmultiplex (TDMA) ist ein TDD (time division duplex) Übertragungsverfahren, bei dem in einem gemeinsamen schmalbandigen Frequenzkanal die Übertragung sowohl in Aufwärtsrichtung, d.h. von der Mobilstation zur Basisstation, als auch in Abwärtsrichtung, d.h. von der Basisstation zur Mobilstation, erfolgt. Ein derartiges TDD-Übertragungsverfahren ist aus dem DECT (digital enhanced cordless telephony) System bekannt. Ein Rahmen beim DECT-System besteht aus 24 Zeitschlitzen, von denen jeweils die Hälfte ständig für die Auf- und die Abwärtsrichtung genutzt wird.

Das DECT-System kennt anders als bei Mobilfunknetzen keine netzseitige Zuteilung von funktechnischen Ressourcen, sondern die Mobilstation suchen sich entsprechend der Übertragungsverhältnisse selbst einen Frequenzbereich und einen Zeitschlitz aus. Alle in beide Übertragungsrichtungen übermittelten Funkblöcke haben eine gemeinsame Länge, die im Vergleich zur Dauer eines Zeitschlitzes stark verkürzt ist, so daß die Funkblöcke auch unter widrigen Übertragungsbedingungen und für die Zeitschlitze um den Umschaltzeitpunkt zwischen Aufund Abwärtsrichtung auf der Empfangsseite gut trennbar sind. Jedoch ist die spektrale Effizienz nicht sehr gut, da die nicht genutzte Zeitdauer eines Zeitschlitzes für die Informationsübertragung verloren geht.

Der Erfindung liegt folglich die Aufgabe zugrunde, ein verbessertes Verfahren und ein verbessertes Funk-Kommunikationssystem zur Informationsübertragung anzugeben, bei denen die spektrale Effizienz erhöht wird. Diese Aufgabe wird durch das Verfahren mit den Merkmalen des Patentanspruchs 1 und das Funk-Kommunikationssystem mit den Merkmalen des Patentanspruchs 9 gelöst. Weiterbildungen der Erfindung sind den Unteransprüchen zu entnehmen.

Erfindungsgemäß wird beim Verfahren zur Informationsübertragung zwischen einer Basisstation und weiteren Funkstationen in einem Funk-Kommunikationssystem die Informationsübertragung in Abwärtsrichtung in einem Frequenzkanal durch erste Funkblöcke und in Aufwärtsrichtung im gleichen Frequenzkanal durch zweite Funkblöcke durchgeführt. Dabei wird zwischen Abwärtsrichtung und Aufwärtsrichtung zumindest ein Umschaltzeitpunkt festgelegt. Diese ersten und zweiten Funkblöcke können entsprechend den Regeln des Mobilfunks für eine möglichst hohe spektrale Effizienz ausgebildet sein. Vor und/oder nach dem Umschaltzeitpunkt wird jedoch ein dritter Funkblock mit im Vergleich zu den ersten und zweiten Funkblöcken verkürzter Dauer übertragen. Damit wird verhindert, daß sich für den Umschaltzeitpunkt der Empfangs- und Sendefall durch ungünstige Signallaufzeitverhältnisse überlappen. Somit wird nur für einen oder zwei Funkblöcke pro Rahmen eine Reduzierung der Datenrate im Vergleich zur maximalen Datenrate der übrigen Funkblöcke nötig, so daß sich insgesamt die erreichbare Datenrate und damit die spektrale Effizienz verbessert.

Nach einer vorteilhaften Weiterbildung der Erfindung werden die Funkblöcke in Zeitschlitzen einheitlicher Zeitdauer übertragen. Es besteht damit ein festes Zeitraster an denen sich die Basisstation und Mobilstationen bezüglich der Sendezeitpunkte orientieren können. Bei einer solchen Zeitschlitzstruktur ist es wichtig, daß für die Funkblöcke um den Umschaltzeitpunkt herum zeitschlitzgetreu beim Empfänger, insbesondere bei der Basisstation, eintreffen. Somit ist besonders der Umschaltzeitpunkt durch die verkürzten dritten Funkblöcke zu sichern, der für die Basisstation das Umschalten von Senden auf Empfangen mit sich bringt. Es wird davon ausgegangen, daß sich die Mobilstation auf die Basisstation synchronisiert.

Die zeitliche Differenz zwischen der Dauer der ersten und der dritten Funkblöcke entspricht vorteilhafterweise im wesentlichen der doppelten Signallaufzeit (round trip delay) zwischen der Basisstation und der weiteren Funkstation. Eine weitere vorteilhafte Ausbildung der Erfindung sieht vor, daß die zeitliche Differenz der Dauer der ersten bzw. zweiten Funkblöcke und der Dauer eines Zeitschlitzes im wesentlichen der Länge einer Kanalimpulsantwort entspricht. Durch diese Einstellungen wird eine bestmögliche Ausnutzung eines Zeitschlitzes erreicht, so daß hohe Datenraten erzielbar sind und trotzdem auch unter ungünstigen Übertragungsbedingungen keine Kollisionen zwischen Sende- und Empfangsfall vorkommen.

Für Funk-Kommunikationssysteme mit Funkzellen variabler Ausdehnung wird die Dauer des dritten Funkblocks vorteilhafterweise umgekehrt proportional zum Radius einer Funkzelle der Basisstation eingestellt. Damit ist für kleine Radien der Verlust an Datenrate geringer als für große Radien. Besonders in Funk-Kommunikationssystemen mit Makrozellen bzw. hierarchischen Zellstrukturen wird damit die spektrale Effizienz weiter erhöht.

Es ist besonders vorteilhaft, daß der Umschaltzeitpunkt innerhalb eines Rahmens mit mehreren Funkblöcken für beide Übertragungsrichtungen einstellbar ist. Damit wird eine asymmetrische Verteilung der Datenrate in Auf- und Abwärtsrichtung entsprechend dem momentanen Bedarf ermöglicht. Für Datenübertragungsdienste, z.B. mobile WWW-Browser, wird oft in Abwärtsrichtung eine größere Informationsmenge zu übertragen sein als in Aufwärtsrichtung. Dies kann bei guter spektraler Effizienz durch das Verschieben des Umschaltzeitpunktes zugunsten der Abwartsrichtung erreicht werden. Wird zu einem späteren Zeitpunkt, z.B. durch eine Sprachübertragung oder durch hohe in Aufwärtsrichtung zu übertragene Daten, die eine symmetrische Ressourcenverteilung bzw. ein die Aufwärtsrichtung begunstigende Ressourcenverteilung benötigen, wiederum eine vergrößerte Datenrate in Aufwärtsrichtung benötigt, kann der Umschaltzeitpunkt dem angepaßt werden.

Das erfindungsgemäße Verfahren ist besonders vorteilhaft für TDD-Systeme anwendbar, bei denen die Frequenzkanäle breitbandig sind und in einem Frequenzkanal gleichzeitig mehrere durch CDMA-Kodes unterscheidbare Signale übertragen werden.

Bei breitbandigen Zeitschlitzen ist es besonders wichtig, den Frequenzkanal in der Zeitachse optimal auszunutzen.

Im folgenden wird die Erfindung anhand eines Ausführungsbeispiels bezugnehmend auf zeichnerische Darstellungen näher erläutert.

Dabei zeigen
- FIG 1: ein Blockschaltbild eines Mobilfunknetzes,
- FIG 2: eine schematische Darstellung der Rahmenstruktur des TDD-Übertragungsverfahrens,
- FIG 3: die Dauer der Funkblöcke in einem Rahmen,
- FIG 4: eine Darstellung der Zuteilung von Zeitschlitzen zu Mobilstationen,
- FIG 5: Blockschaltbilder von Basisstation und Mobilstation,
- FIG 6: ein Ablaufdiagramm für die Informationsübertragung.

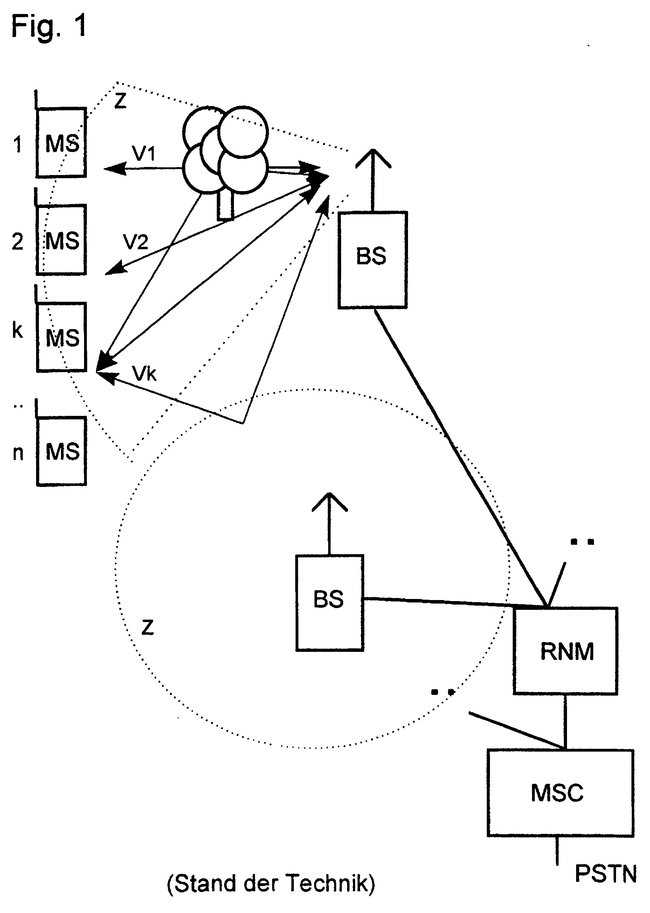

Das in FIG 1 dargestellte Funk-Kommunikationssystem besteht aus einer Vielzahl von Mobilvermittlungsstellen MSC die untereinander vernetzt sind bzw. den Zugang zu einem Festnetz PSTN herstellen. Weiterhin sind diese Mobilvermittlungsstellen MSC mit jeweils zumindest einer Einrichtung RNM zum Zuteilen von funktechnischen Ressourcen verbunden. Jede dieser Einrichtungen RNM ermöglicht wiederum eine Verbindung zu zumindest einer Basisstation BS. Eine solche Basisstation BS kann über eine Funkschnittstelle eine Verbindung zu weiteren Funkstationen, z.B. Mobilstationen MS oder anderweitigen mobilen und stationären Endgeräten aufbauen. Durch jede Basisstation BS wird zumindest eine Funkzelle Z gebildet. Bei einer Sektorisierung oder bei hierarchischen Zellstrukturen werden pro Basisstation BS auch mehrere Funkzellen Z versorgt.

In FIG 1 sind beispielhaft Verbindungen V1, V2, Vk zur Übertragung von Nutzinformationen und Signalisierungsinformationen zwischen Mobilstationen MS1, MS2, MSk, MSn und einer Basisstation BS dargestellt. Ein Operations- und Wartungszentrum OMC realisiert Kontroll- und Wartungsfunktionen für das Mobilfunknetz bzw. für Teile davon. Die Funktionalität dieser Struktur ist auf andere Funk-Kommunikationssysteme übertragbar, in denen die Erfindung zum Einsatz kommen kann, insbesondere für Teilnehmerzugangsnetze mit drahtlosem Teilnehmeranschluß.

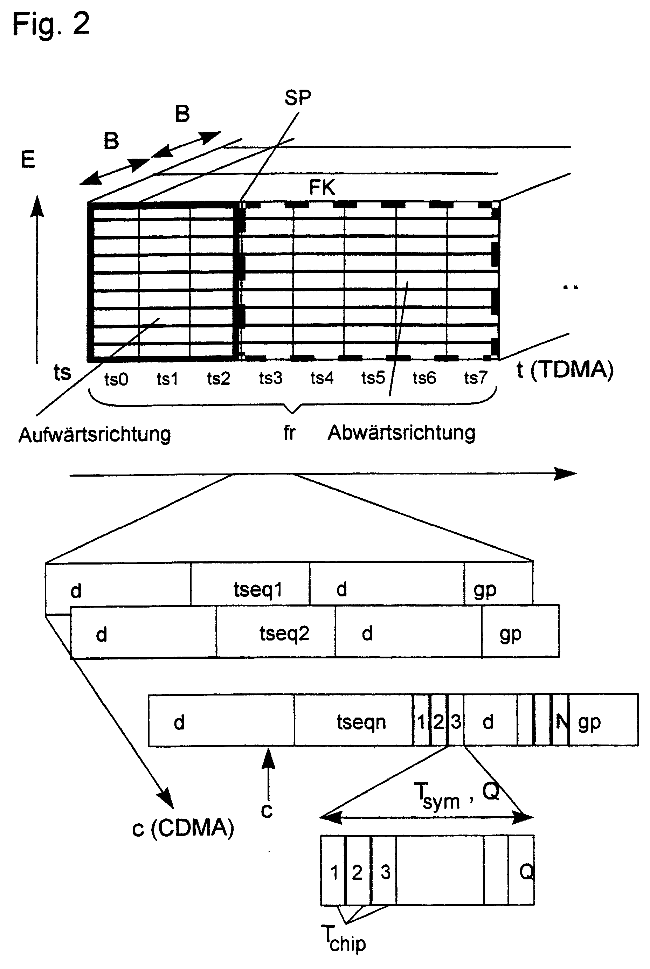

Die Rahmenstruktur der Funkübertragung ist aus FIG 2 ersichtlich. Gemäß einer TDMA-Komponente ist eine Aufteilung eines breitbandigen Frequenzbereiches, beispielsweise der Bandbreite B = 1,2 MHz in mehrere Zeitschlitze ts gleicher Zeitdauer, beispielsweise 8 Zeitschlitze ts0 bis ts7 vorgesehen. Der Frequenzbereich B bildet einen Frequenzkanal FK. Ein Teil der Zeitschlitze ts0 bis ts2 werden in Aufwärtsrichtung und ein Teil der Zeitschlitze ts3 bis ts7 werden in Abwärtsrichtung benutzt. Dazwischen liegt ein Umschaltzeitpunkt SP. Die Übertragung in Aufwärtsrichtung erfolgt beispielsweise vor der Übertragung in Abwärtsrichtung. Bei diesem TDD-Übertragungsverfahren entspricht der Frequenzkanal FK für die Aufwärtsrichtung dem Frequenzkanal FK für die Abwärtsrichtung. Gleiches wiederholt sich für weitere Trägerfrequenzen.

Innerhalb der Frequenzkanäle FK, die allein zur Nutzdatenübertragung vorgesehen sind, werden Informationen mehrerer Verbindungen in Funkblöcken übertragen. Diese Funkblöcke zur Nutzdatenübertragung bestehen aus Abschnitten mit Daten d, in denen Abschnitte mit empfangsseitig bekannten Trainingssequenzen tseq1 bis tseqn eingebettet sind. Die Daten d sind verbindungsindividuell mit einer Feinstruktur, einem Teilnehmerkode c, gespreizt, so daß empfangsseitig beispielsweise n Verbindungen durch diese CDMA-Komponente separierbar sind.

Die Spreizung von einzelnen Symbolen der Daten d bewirkt, daß innerhalb der Symboldauer T_{sym} Q Chips der Dauer T_{chip} übertragen werden. Die Q Chips bilden dabei den verbindungsindividuellen Teilnehmerkode c. Weiterhin ist innerhalb des Zeitschlitzes ts eine Schutzzeit gp zur Kompensation unterschiedlicher Signallaufzeiten der Verbindungen vorgesehen.

Innerhalb eines breitbandigen Frequenzbereiches B werden die aufeinanderfolgenden Zeitschlitze ts nach einer Rahmenstruktur gegliedert. So werden acht Zeitschlitze ts zu einem Rahmen fr zusammengefaßt, wobei beispielsweise ein Zeitschlitz ts3 wiederkehrend von einer Gruppe von Verbindungen genutzt wird. Es können jedoch auch Rahmen mit mehr als acht Zeitschlitzen, z.B. 16 oder 32 Zeitschlitzen, gebildet werden.

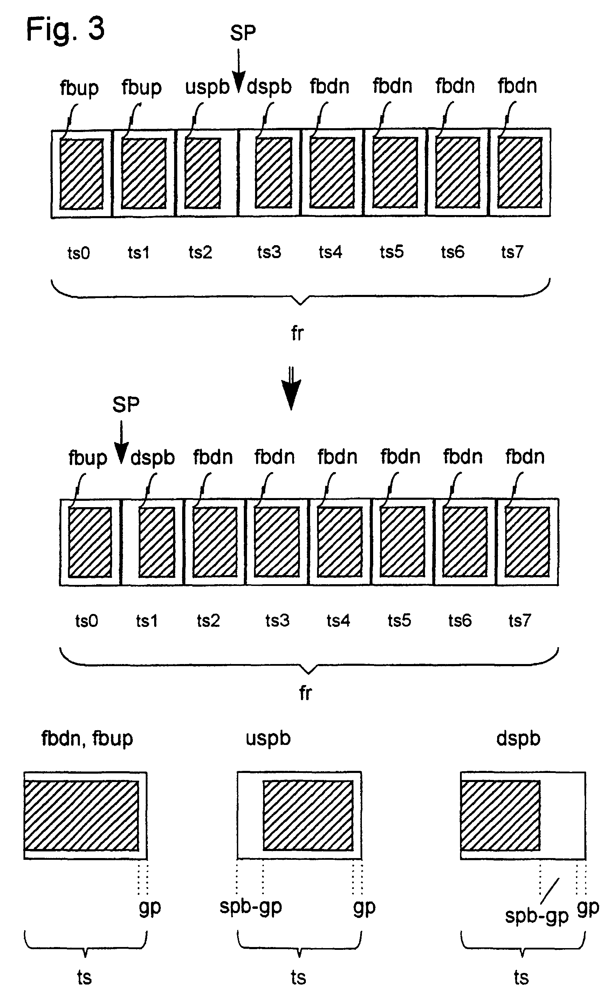

In FIG 3 ist ein Rahmen fr mit acht Zeitschlitzen ts0 bis ts7 gezeigt, wobei wie in FIG 2 drei Zeitschlitze ts0 bis ts2 in Aufwärtsrichtung und fünf Zeitschlitze ts3 bis ts7 in Abwärtsrichtung benutzt werden. Ein Umschaltzeitpunkt SP markiert die Übergang zwischen den Übertragungsrichtungen innerhalb des Rahmens fr.

Für die Aufwärtsrichtung werden in den zwei Zeitschlitzen ts0 und ts1 erste Funkblöcke fbup verwendet. Für die Abwärtsrichtung werden in den Zeitschlitzen ts4 bis ts7 zweite Funkblöcke fbdn verwendet. Diese ersten und zweiten Funkblöcke können als sogenannte "normal bursts" bezeichnet werden und sind im Sinne einer hohen spektralen Effizienz ausgelegt. Dies bedeutet, daß nur eine im wesentlichen an die Kanalimpulsantwort, d.h. entsprechend der Mehrwegeausbreitung innerhalb der Funkzelle, angepaßte Schutzzeit gp vorgesehen ist. Diese Schutzzeit gp ist die zeitliche Differenz der Dauer der ersten und zweiten Funkblöcke fbup, fbdn zur Dauer der Zeitschlitze ts. Die Schutzzeit gp ist beispielsweise zum Ende des Zeitschlitzes ts vorgesehen. Es kann jedoch alternativ vorgesehen sein, daß sich die Längen der ersten und zweiten Funkblöcke fbup, fbdn unterscheiden.

Für die Zeitschlitze ts2 und ts3 um den Umschaltzeitpunkt SP herum sind verkürzte dritte Funkblöcke uspb, dspb vorgesehen.

Es sei angemerkt, daß es alternativ möglich ist nur einen verkürzten Funkblock sei es nur in Aufwärtsrichtung oder nur in Abwärtsrichtung zu verwenden. Ein dritter Funkblock uspb für die Aufwärtsrichtung sieht zu Beginn des Zeitschlitzes ts eine zusätzliche Schutzzeit spb-gp für den Umschaltmoment vor. In Abwärtsrichtung liegt diese zusätzliche Schutzzeit spb-gp zum Ende des Zeitschlitzes ts.

Diese zusätzliche Schutzzeit spb-gp entspricht im wesentlichen der doppelten Signallaufzeit zwischen Basisstation BS und Mobilstation MS. Werden in einem Zeitschlitz nur Informationen einer Mobilstation MS übertragen, kann die zusätzliche Schutzzeit spb-gp individualisiert festgelegt werden. Werden die Informationen mehrerer Mobilstationen MS in diesem Zeitschlitz ts übertragen, muß die längste Signallaufzeit berücksichtigt werden. Soll die zusätzliche Schutzzeit spb-gp weniger flexibel ausgelegt sein, um den dafür notwendigen Signalisierungsaufwand zu reduzieren, dann wird sie entsprechend der Ausdehnung, d.h. dem Radius, der Funkzelle Z der Basisstation BS festgelegt. Bei hierarchischen Zellstrukturen liegen mehrere Ebenen von Funkzellen unterschiedlicher Ausdehnung übereinander, so daß bei sogenannten Makrozellen mit größerem Radius längere Schutzzeiten spb-gp als bei sogenannten Mikrozellen mit kleinerem Radius verwendet werden.

Als ein Rechenbeispiel sei angegeben, daß für einen Abstand zwischen Mobilstation MS und Basisstation BS von 5 km die doppelte Signallaufzeit ca. 33,3 µs beträgt, so daß eine zusätzliche Schutzzeit von zumindest 33,3 µs vorzusehen ist.

In FIG 3 ist ebenfalls gezeigt, daß der Umschaltzeitpunkt SP innerhalb des Rahmens fr verschoben werden kann. Wird der Umschaltzeitpunkt SP zwischen den ersten und zweiten Zeitschlitz ts0, ts1 gelegt, steht eine größere Übertragungskapazität in Abwärtsrichtung zur Verfügung. Entsprechend des momentan Bedarfs an Übertragungskapazität können die funktechnischen Ressourcen optimal verteilt werden.

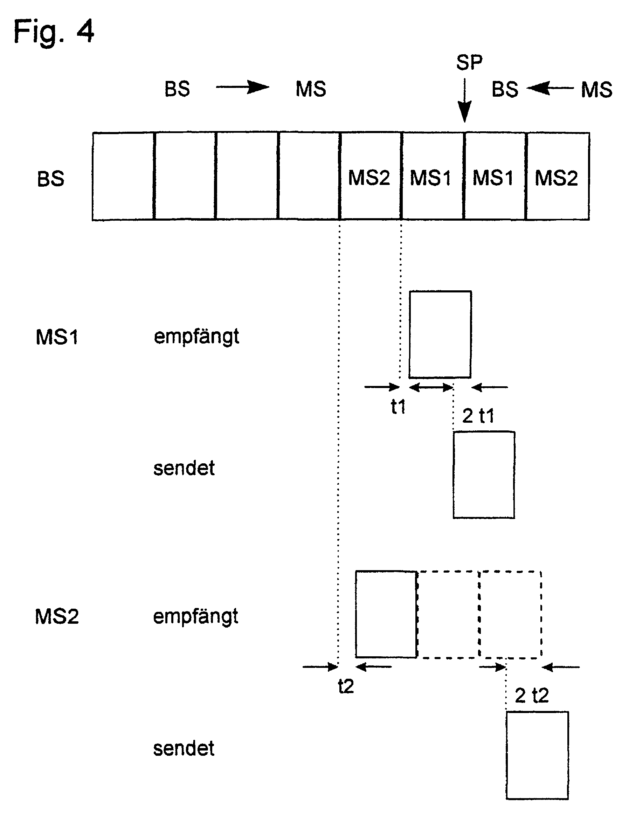

Die Berechnung der zusätzlichen Schutzzeit spb-gp ergibt sich aus der Konstellation nach FIG 4. Hierbei wird im Gegensatz zu FIG 2 und 3 angenommen, daß innerhalb eines Rahmens zuerst in Abwärts- und dann in Aufwärtsrichtung übertragen wird. Die Zeitstruktur der Informationsübertragung wird von den Zeitschlitzen abgeleitet, die von der Basisstation BS gesendet werden. Der Umschaltzeitpunkt SP liegt nach dem sechsten Zeitschlitz. In Abwärtsrichtung werden Informationen für eine zweite Mobilstation MS2 im fünften und Informationen für eine erste Mobilstation MS1 im sechsten Zeitschlitz übertragen. Für die Aufwärtsrichtung sendet die erste Mobilstation MS1 im siebenten Zeitschlitz und die zweite Mobilstation MS2 im achten Zeitschlitz des Rahmens.

In Abwärtsrichtung erreichen die von der Basisstation BS gesendeten Funkblöcke die Mobilstationen MS1, MS2 um die jeweilige Signallaufzeit t1, t2 verzögert. Die Signallaufzeit hängt von der Entfernung zwischen Basisstation BS und Mobilstation MS1, MS2 ab. In Aufwärtsrichtung müssen die Funkblöcke mit einer Vorhaltzeit von 2 mal t1, t2 gesendet werden, damit sie ohne Zeitverschiebung im richtigen Zeitschlitz bei der Basisstation BS eintreffen. Ansonsten würde sich eine Überlappung des Sende- und Empfangsfalles bei Mobilstation MS1 oder Basisstation BS ergeben. In FIG 4 würde sich ohne die Beachtung der verkürzten Funkblöcke eine Überlagerung des Sendesignals der Basisstation BS mit dem Sendesignal der ersten Mobilstation MS1 ergeben. Das Sendesignal der zweiten Mobilstation MS2 kollidiert nicht mit dem Sendesignal der ersten Mobilstation MS1, wenn der maximale Zellradius nicht überschritten wird.

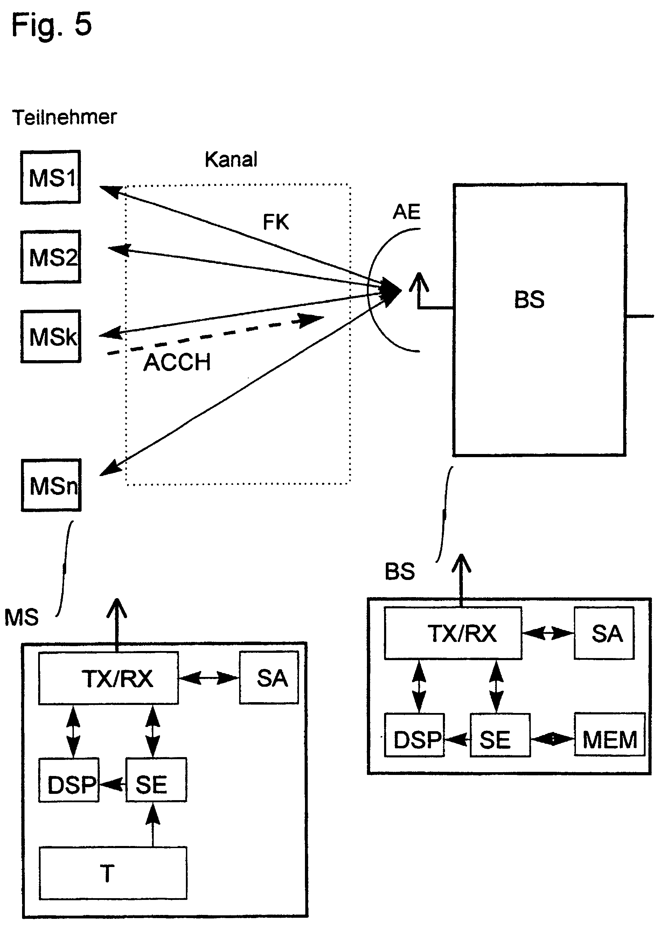

FIG 5 zeigt die Informationsübertragung von der Basisstation BS zu Mobilstationen MS1 bis MSn. Die Mobilstationen MS1 bis MSn bestimmen zuerst einen oder mehrere Frequenzbereiche mit einer ausreichend hohen oder maximalen Empfangsleistung. Dies sind die Frequenzbereiche der nächstliegenden Basisstation BS, in deren Zelle sich die Mobilstation MS momentan befindet. Somit entsteht die Zuordnung von Basisstation MS und Mobilstation MS.

Die Basisstation BS enthält eine Sende/Empfangseinrichtung TX/RX, die abzustrahlende Sendesignale digital/analog wandelt, vom Basisband in den Frequenzbereich der Abstahlung umsetzt und die Sendesignale moduliert und verstärkt. Eine Signalerzeugungseinrichtung SA hat zuvor die Sendesignale in Funkblöcken zusammengestellt und dem entsprechenden Frequenzkanal und Zeitschlitz zugeordnet. Eine Signalverarbeitungseinrichtung DSP wertet über die Sende/Empfangseinrichtung TX/RX empfangene Empfangssignale aus und führt eine Kanalschätzung durch.

Zur Signalverarbeitung werden die Empfangssignale in Symbole mit diskretem Wertevorrat umgewandelt, beispielsweise digitalisiert. Eine Signalverarbeitungseinrichtung DSP, die als digitaler Signalprozessor einen JD-Prozessor zum Detektieren der Nutzinformationen und der Signalisierungsinformationen nach dem JD-CDMA-Verfahren (joint detection) enthält, wertet die Datenteile d aus. Das Zusammenwirken der Komponenten und die Einstellung des Umschaltzeitpunkts SP wird durch eine Steuereinrichtung SE der Basisstation BS gesteuert. Zugehörige Daten über den Umschaltzeitpunkt SP und die konkreten Gegebenheiten der Verbindung werden in einer Speichereinrichtung MEM gespeichert.

Die Mobilstation MS enthält entsprechend adaptiert die für die Basisstation BS erläuterten Baugruppen und zusätzlich ein Bedienfeld T. Am Bedienfeld T kann der Teilnehmer Eingaben vornehmen, u.a. eine Eingabe zum Aktivieren der Mobilstation MS oder zum Verbindungsaufbau einer Verbindung zur Basisstation BS. Die Steuereinrichtung SE wertet in Abwärtsrichtung gesendete und von der Mobilstation MS empfangene Signale aus, bestimmt die Empfangsleistung bzw. das vorliegende momentane Signal/Stör-Verhältnis und veranlaßt eine Signalisierung zur Basisstation BS in einem Signalisierungskanal ACCH, worauf ein Frequenzkanal FK und ein Zeitschlitz ts für eine Nutzdatenübertragung zugewiesen wird.

Die Festlegung des Umschaltzeitpunkts SP zwischen Abwärtsrichtung und Aufwärtsrichtung erfolgt durch die Steuereinrichtung SE der Basisstation. Zum Einstellen der Länge des dritten Funkblocks dspb, uspb vor bzw. nach dem Umschaltzeitpunkt SP dienen die Steuereinrichtung SE der jeweils sendenden Station, d.h. der Mobilstation MS für die Aufwärtsrichtung und der Basisstation BS für die Abwärtsrichtung.

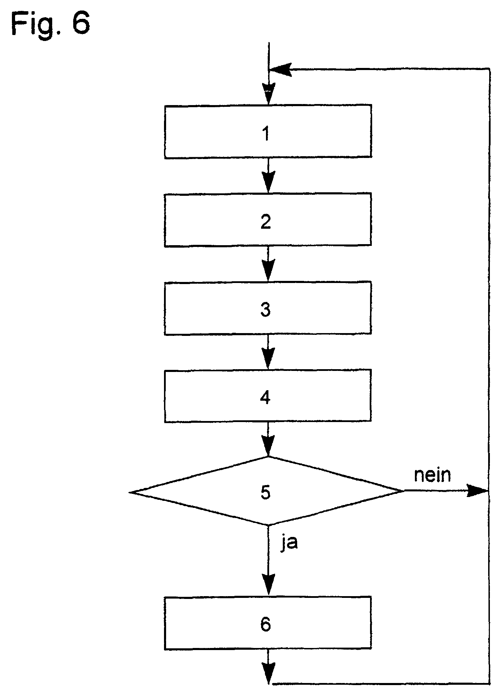

In FIG 6 ist der Ablauf der Informationsübertragung stark vereinfacht dargestellt. In einem ersten Schritt erfolgt bezugnehmend auf FIG 3 die Übertragung der ersten Funkblöcke fbup in den Zeitschlitzen ts0 bis ts1 eines Frequenzkanals FK. In einem zweiten Schritt wird in Aufwärtsrichtung ein verkürzter dritter Funkblock uspb im Zeitschlitz ts2 übertragen. Nach dem darauffolgenden Umschaltzeitpunkt SP sendet die Basisstation BS in dem bereits zuvor benutzten Frequenzkanal FK. In einem dritten Schritt wird ein verkürzter dritter Funkblock dspb im Zeitschlitz ts4 übertragen, worauf in einem vierten Schritt zweite Funkblöcke fbdn in den Zeitschlitzen ts3 bis ts7 übertragen werden.

In einem fünften Schritt nach Ende des Rahmens fr wird eine am Bedarf für die Übertragungskapazität in beiden Übertragungsrichtungen orientierte Abfrage, ob der Umschaltzeitpunkt SP verschoben werden soll, durchgeführt.

Ist dies der Fall, wird in einem sechsten Schritt der neue Umschaltzeitpunkt SP festgelegt, so daß im darauffolgenden Rahmen fr der und/oder die verkürzten Funkblöcke dspb, uspb in anderen Zeitschlitzen ts0, ts1 übertragen werden.

## Patentansprüche

1. Verfahren zur Informationsübertragung zwischen einer Basisstation (BS) und weiteren Funkstationen (MS) in einem Funk-Kommunikationssystem,
bei dem innerhalb eines Übertragungsrahmens (fr)
- die Informationsübertragung in Abwärtsrichtung in einem Frequenzkanal (FK) durch erste Funkblöcke (fbdn) erfolgt,
- die Informationsübertragung in Aufwärtsrichtung im gleichen Frequenzkanal (FK) durch zweite Funkblöcke (fbup) erfolgt,
- zwischen Abwärtsrichtung und Aufwärtsrichtung zumindest ein Umschaltzeitpunkt (SP) festgelegt wird, wobei
- vor und/oder nach dem Umschaltzeitpunkt (SP) innerhalb des Rahmens (fr)ein dritter Funkblock (dspb, uspb) mit im Vergleich zu den ersten bzw. zweiten Funkblöcken (fbdn, fbup) verkürzter Dauer übertragen wird.

2. Verfahren nach Anspruch 1, bei dem
die Funkblöcke (fbdn, fbup, dspb, uspb) in Zeitschlitzen (ts) einheitlicher Zeitdauer übertragen werden.

3. Verfahren nach einem der vorhergehenden Ansprüche, bei dem die zeitliche Differenz zwischen der Dauer der ersten und der dritten Funkblöcke (fbdn, dspb) näherungsweise der doppelten Signallaufzeit zwischen der Basisstation (BS) und der weiteren Funkstation (MS) entspricht.

4. Verfahren nach Anspruch 2, bei dem
die zeitliche Differenz zwischen der Dauer der ersten bzw. zweiten Funkblöcke (fbdn, fbup) und der Dauer eines Zeitschlitzes (ts) näherungsweise der Dauer einer Kanalimpulsantwort entspricht.

5. Verfahren nach einem der vorherigen Ansprüche, bei dem der zumindest eine verkürzte dritte Funkblock (dspb, uspb) näherungsweise zum Umschaltzeitpunkt (SP) von Abwärts- zu Aufwärtsrichtung gesendet wird.

6. Verfahren nach einem der vorherigen Ansprüche, bei dem die Dauer des dritten Funkblocks (dspb, uspb) umgekehrt proportional zum Radius einer Funkzelle (Z) der Basisstation (BS) eingestellt wird.

7. Verfahren nach einem der vorherigen Ansprüche, bei dem der Umschaltzeitpunkt (SP) innerhalb eines Rahmens (fr) mit mehreren Funkblöcken (fbdn, fbup, dspb, uspb) in beiden Übertragungsrichtungen veränderbar ist.

8. Verfahren nach einem der vorherigen Ansprüche, bei dem die Frequenzkanäle (FK) breitbandig sind und in einem Frequenzkanal (FK) gleichzeitig mehrere durch CDMA-Kodes unterscheidbare Signale übertragen werden.

9. Funk-Kommunikationssystem
- mit einer Basisstation (BS) zur Informationsübertragung zu zumindest einer weiteren Funkstation (MS),
- mit einer Einrichtung (RNM) zum Zuteilen von funktechnischen Ressourcen, so daß innerhalb eines Übertragungsrahmens (fr) die Informationsübertragung in Abwärtsrichtung in einem Frequenzkanal (FK) durch erste Funkblöcke (fbdn) und in Aufwärtsrichtung im gleichen Frequenzkanal (FK) durch zweite Funkblöcke (fbup) erfolgt,
- und mit einer Steuereinrichtung (SE)
- zum Festlegen zumindest eines Umschaltzeitpunkts (SP) zwischen Abwärtsrichtung und Aufwärtsrichtung, wobei
- die Steuereinrichtung auch zum Einstellen eines dritten Funkblocks (dspb, uspb) innerhalb des Rahmens (fr) vor und/oder nach dem Umschaltzeitpunkt (SP) dient, der im Vergleich zu den ersten bzw. zweiten Funkblöcken (fbdn, fbup) verkürzt ist und innerhalb desselben Übertragunsrahmens (fr) wie diese übertragen wird.

## Claims

1. Method for transmitting information between a base station (BS) and other radio stations (MS) in a radio communications system,
in which, within a transmission frame (fr),
- the information is transmitted by first bursts (fbdn) in a frequency channel (FK) in the downlink direction,
- the information is transmitted by second bursts (fbup) in the same frequency channel (FK) in the uplink direction,
- at least one switching point (SP) is defined between the uplink direction and the downlink direction,
- a third burst (dspb, uspb) of shorter duration than the first and second bursts (fbdn, fbup) being transmitted before and/or after the switching point (SP) within the frame (fr).

2. Method according to Claim 1, in which the bursts (fbdn, fbup, dspb, uspb) are transmitted in time slots (ts) of uniform duration.

3. Method according to one of the preceding claims, in which the time difference between the duration of the first and the third bursts (fbdn, dspb) corresponds approximately to twice the signal propagation time between the base station (BS) and the other transceiver station (MS).

4. Method according to Claim 2, in which the time difference between the duration of the first and second bursts (fbdn, fbup) and the duration of a time slot (ts) corresponds approximately to the duration of a channel impulse response.

5. Method according to one of the preceding claims, in which the at least one shortened third burst (dspb, uspb) is transmitted approximately at the switching point (SP) from the downlink direction to the uplink direction.

6. Method according to one of the preceding claims, in which the duration of the third burst (dspb, uspb) is set to be inversely proportional to the radius of a radio cell (Z) of the base station (BS).

7. Method according to one of the preceding claims, in which the switching point (SP) within a frame (fr) comprising a number of bursts (fbdn, fbup, dspb, uspb) can be changed in both directions of transmission.

8. Method according to one of the preceding claims, in which the frequency channels (FK) have a wide bandwidth and a number of signals which can be distinguished by means of CDMA codes are simultaneously transmitted in one frequency channel (FK).

9. Radio communication system
- having a base station (BS) for transmitting information to at least one other radio station (MS),
- having a device (RNM) for allocating radio resources, so that, within a transmission frame (fr), the information is transmitted by first bursts (fbdn) in a frequency channel (FK) in the downlink direction and by second bursts (fbup) in the same frequency channel (FK) in the uplink direction,
- and having a control device (SE)
- for defining at least one switching point (SP) between the downlink direction. and the uplink direction, with
- the control device also being used for setting a third burst (dspb, uspb) within the frame (fr) before and/or after the switching point (SP), which is shorter than the first and second bursts (fbdn, fbup) and is transmitted within the same transmission frame (fr) as them.

## Revendications

1. Procédé destiné à la transmission d'informations entre une station de base (BS) et d'autres postes radio (MS) dans un système de communication par radio,
dans lequel, à l'intérieur d'une trame de transmission (fr),
- la transmission d'informations a lieu, dans le sens descendant, dans un canal de fréquences (FK) grâce à des premiers blocs radio (fbdn),
- la transmission d'informations a lieu, dans le sens ascendant, dans le même canal de fréquences (FK) grâce à des deuxièmes blocs radio (fbup),
- entre le sens descendant et le sens ascendant, au moins un instant d'inversion (SP) est défini,
- avant et/ou après l'instant d'inversion (SP), à l'intérieur de la trame (fr), un troisième bloc radio (dspb, uspb) étant transmis, lequel a une durée plus courte que les premiers et les deuxièmes blocs radio (fbdn, fbup).

2. Procédé selon la revendication 1 dans lequel
les blocs radio (fbdn, fbup, dspb, uspb) sont transmis dans des tranches de temps (ts) d'une durée uniforme.

3. Procédé selon l'une des revendications précédentes dans lequel
la différence de temps entre la durée des premiers blocs radio et celle des troisièmes blocs radio (fbdn, dspb) correspond approximativement au double du temps de propagation du signal entre la station de base (BS) et l'autre station radio (MS).

4. Procédé selon la revendication 2 dans lequel
la différence de temps entre la durée des premiers blocs radio et/ou des deuxièmes blocs radio (fbdn, fbup) et la durée d'une tranche de temps (ts) correspond approximativement à la durée d'une réponse du canal aux impulsions.

5. Procédé selon l'une des revendications précédentes dans lequel
le au moins un troisième bloc radio raccourci (dspb, uspb) est émis approximativement à l'instant d'inversion (SP) entre le sens descendant et le sens ascendant.

6. Procédé selon l'une des revendications précédentes dans lequel
la durée du troisième bloc radio (dspb, uspb) est réglée de telle sorte qu'elle soit inversement proportionnelle au rayon d'une cellule radio (Z) de la station de base (BS).

7. Procédé selon l'une des revendications précédentes dans lequel
l'instant d'inversion (SP) peut être modifié à l'intérieur d'une trame (fr) avec plusieurs blocs radio (fbdn, fbup, dspb, uspb) dans les deux sens de transmission.

8. Procédé selon l'une des revendications précédentes dans lequel
les canaux de fréquences (FK) sont à large bande et plusieurs signaux, qui peuvent être discriminés grâce à des codes COMA ou AMDC, sont transmis simultanément dans un canal de fréquences (FK).

9. Système de communication par radio
- avec une station de base (BS) destinée à la transmission d'informations vers au moins une autre station radio (MS),
- avec un dispositif (RNM) destiné à allouer des ressources radio de telle sorte que, à l'intérieur d'une trame de transmission (fr), la transmission d'informations a lieu, dans le sens descendant, dans un canal de fréquences (FK), grâce à des premiers blocs radio (fbdn) et, dans le sens ascendant, dans le même canal de fréquences (FK), grâce à des deuxièmes blocs radio (fbup),
- et avec un dispositif de commande (SE)
- destiné à déterminer au moins un instant d'inversion (SP) entre le sens descendant et le sens ascendant,
- le dispositif de commande servant également à régler, à l'intérieur de la trame (fr), avant et/ou après l'instant d'inversion (SP), un troisième bloc radio (dspb, uspb), qui est plus court que les premiers et/ou les deuxièmes blocs radio (fbdn, fbup) et qui est transmis comme ceux-ci à l'intérieur de la même trame de transmission (fr).
